# EUROPEAN PATENT SPECIFICATION

(11) **EP 1 937 469 B1**
(45) Date of publication and mention of the grant of the patent: **22.05.2013**
(21) Application number: 06804052.6
(22) Date of filing: 22.09.2006
(51) Int. Cl.: B32B 5/16, B32B 27/08, B31B 1/60, B32B 7/02

(54) **LOW MOISTURE ABSORBING ACRYLIC SHEET**
FEUCHTIGKEITSARME, ABSORBIERENDE ACRYLFOLIE
FEUILLE EN ACRYLIQUE A FAIBLE ABSORPTION D'HUMIDITE

(30) Priority: 28.09.2005 US 721197 P
(43) Date of publication of application: 02.07.2008
(73) Proprietor: ARKEMA FRANCE, 92700 Colombes (FR)
(72) Inventor: COHEN, Leslie, A., Langhome, PA 19053 (US); DIRKX, Ryan, R., Glenmore, PA 19343 (US); REILLY, Jack, J., Blue Bell, PA 19422 (US)
(74) Representative: Bonnel, Claudine
(86) International application number: PCT/US2006/037022
(87) International publication number: WO 2007/038295

(56) References cited:
- WO-A1-2008/144171
- JP-A- 2004 161 975
- US-A1- 2004 191 550
- US-A1- 2006 058 460

## Description

### Field of the Invention

The invention relates to a low moisture-absorbing multi-layer acrylic sheet, film, profile or other shaped multi-layer object having of an acrylic substrate, a tie layer, and at least one layer of a moisture-resistant material. Preferably, the acrylic sheet, film, profile or other shaped multi-layer object is transparent.

### Background of the Invention

Acrylic sheet, film and profiles, having methyl methacrylate as the major component, are tough, clear materials, useful in many applications.

One drawback of acrylic sheeting is that it tends to absorb some water in wet or humid environments, which can cause the side exposed to the moisture to expand slightly. This may be seen as undesirable warping or bowing of the acrylic material. The deformation of the acrylic sheet is especially undesirable where optical properties of the acrylic sheet are crucial - such as in lenses and screens for optical devices.

Capping layers or films have been used to increase the weatherability of thermoplastic substrates. Generally acrylic capstocks have been used to improve the weatherability of lower weather resistant thermoplastics such as polyolefins and styrenic polymers.

US 6,743,865, describes fluoropolymer-acrylic compositions with enhanced weathering properties.

US 2006/0078744 describes a substrate having a cyclic olefin polymer or copolymer as a low moisture adsorption layer to prevent the loss of water from a substrate. The structure uses an adhesive layer between the substrate and insulating layers, and is formed by coextrusion. Coextrusion does not work for many adhesive layer compositions, due to differences in viscosity between the adhesive layer and other layers.

It has now been found that the addition of a low-moisture absorbing layer and a tie layer on one or both sides of an acrylic substrate results in a low-moisture-absorbing acrylic sheet that resists the warping and bowing resulting from moisture absorption in standard acrylic sheet. The tie layer composition may be used in a co-extrusion process by minimizing viscosity differences between the extruded layers at typical acrylic sheet processing conditions while also providing the suitable adhesion between the layers for long-term uses.

### Summary of the Invention

The invention relates to a low moisture absorbing multi-layer acrylic sheet, film, profile or other shaped object, comprising an acrylic substrate, at least one tie layer and at least one moisture-resistant material between the acrylic substrate and the side of the multi-layer acrylic sheet in contact with the environment.

### Brief description of the Drawings

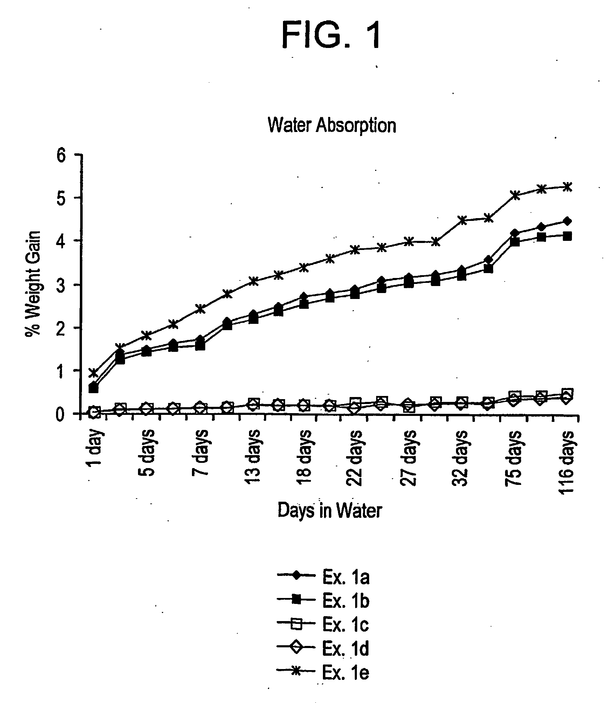

Figure 1 is a plot of water absorption vs. time for an acrylic sheet having various protective layers.

### Detailed Description of the Invention

By "weatherable", as used herein is meant that articles made of the acrylic sheet will have no significant changes in yellowness index (ΔYI) and Haze% (ΔHaze) after exposure under an artificial Xenon Arc weathering device, reference test method ASTM G155, ASTM-D1003 and ASTM E313. The ASTM stands for American Society for Testing and Materials.

By "transparent" as used herein is meant the acrylic sheet has a total white light transmission (TWLT) higher than 50% and haze% lower than 30%, measured by ASTM-D1003.

By "sheet", "sheet or profile" as used herein is meant a multi-layer sheet having a substrate, tie layer(s) and a low moisture adsorbing layer(s). The term "sheet" is generally used to mean any the composition or article in a solid form, which could be a sheet, film, profile, or other shaped multi-layer object.

The invention is an acrylic substrate having a thin layer of moisture-resistant material with a tie layer between the substrate and moisture-resistant material. Other layers may also be present in the acrylic sheet.

The acrylic polymer substrate includes polymers, copolymers and terpolymers formed from alkyl methacrylate and alkyl acrylate monomers, and mixtures thereof. The alkyl methacrylate monomer is preferably methyl methacrylate, which may make up from 60 to 100 of the monomer mixture. 0 to 40 percent of other acrylate and methacrylate monomers may also be present in the monomer mixture. Other methacrylate and acrylate monomers useful in the monomer mixture include, but are not limited to methyl acrylate, ethyl acrylate and ethyl methacrylate, butyl acrylate and butyl methacrylate, iso-octyl methacrylate and acrylate, lauryl acrylate and lauryl methacrylate, stearyl acrylate and stearyl methacrylate, isobornyl acrylate and methacrylate, methoxy ethyl acrylate and methacrylate, 2-ethoxy ethyl acrylate and methacrylate, dimethylamino ethyl acrylate and methacrylate monomers. Alkyl (meth) acrylic acids such as (meth)acrylic acid and acrylic acid can be useful for the monomer mixture. Small levels of multifunctional monomers as crosslinking agents may also be used. Suitable crosslinking monomers include but are not limit to, for example, allyl methacrylate, allyl acrylate, divinylbenzene, ethylene glycol dimethacrylate and diacrylate, ethylene glycol triacrylate and trimethacrylate, butylene glycol dimethacrylate, glycidyl methacrylate, triallyl isocyanurate, N-hydroxymethyl acrylamide, N,N-methylene diacrylamide and dimethacrylamide, triallyl citrate, trimethylolpropane triacylate, trimethylolpropane trimethacrylate, diethyleneglycol divinyl ether, etc..

The acrylic substrate layer makes up over 50% and preferably over 75% of the overall acrylic sheet, film, profile, or other shaped multi-layer obj ect.

The acrylic substrate or other acrylic-containing layers may include from 3 to 50 percent by weight, of one or more impact modifiers within that layer. Preferred impact modifiers are core-shell multi-layer polymers and block copolymers having at least one hard and at least one soft block. The core-shell (multi-layer) impact modifiers could have a soft (rubber or elastomer) core and a hard shell, a hard core covered with a soft elastomer-layer, and a hard shell, of other core-shell morphology known in the art. The rubber layers are composed of low glass transition (Tg) polymers, including, but not limited to, butyl acrylate (BA), ethylhexyl acrylate (EHA), butadiene (BD), BD/styrene, butylacrylate/styrene, and many other combinations.

The acrylic substrate or other acrylic-containing layers may include from 0.1 to 50 percent by weight, of one or more light diffusing particles within that layer. Preferred light diffusing particles have a refractive index that differs from that of the matrix by 0.001 as measured in accordance with ASTM D542. The particles are typically polymeric and cross-linked. They may be polymerized using various techniques but suspension polymerization is preferred. The particles are preferable spherical and have a diameter in the range of 1-500 microns. The polymeric particles have compositions including, but not limited to, acrylic polymers or acrylic-styrene copolymers.

The acrylic substrate may be made by any method known in the art. This includes extrusion, melt calendaring, and continuous cast and cell cast polymerization methods.

The moisture-resistant material is a material that has a low or reduced water absorption, is a vapor barrier, or modifies the water transport rate, and is preferably transparent. In one embodiment, the low-moisture material is highly weatherable, and resistant to UV degradation. Examples of moisture-resistant materials useful in the present invention include, but are not limited to, an acrylic/polyvinylidene fluoride (PVDF) blend, PVDF and its copolymers such as PVDF/HFP (hexafluoropropylene) copolymers, a polyvinylfluoride polymer such as TEDLAR^{®} (Dupont), polytetrafluoroethylene, polytrifluoroethylene, polytrifluorochloroethylene, vinylidenefluoride- trifluorochloroethylene copolymer, vinylidenefluoride-tetrafluoroethylene copolymer, tetrafluoroethylene-hexafluoropropylene copolymer, a cyclic olefin copolymer (COC), polystyrenics, polyesters, glycol-modified polyester (PETG), polycarbonates, polystyrene/acrylonitrile (PSAN), ASA (acrylate-styrene-acrylonitrile polymer), and transparent ABS (acrylonitrile-butadiene-styrene polymer). A polyvinylidene fluoride moisture-resistant layer may be a homopolymer or copolymer of PVDF. A PVDF moisture-resistant layer is also meant to include a blend of an acrylic polymer and a PVDF polymer, as well as a copolymer formed through the polymerization of acrylic polymer over a PVDF seed. A double or triple layer film may be used having a higher level of PVDF in the outer film surface (exposed to the environment), and a higher level of acrylic polymer in the inner film surface (on the acrylic substrate side) to improve the adhesion to the acrylic substrate. These types of films are described in WO 2006/089805 A1. The layer having a higher level of acrylic polymer serves as a tie layer between the acrylic substrate and high PVDF moisture-resistant layer. One or more layers of the film may contain an impact-modified acrylic polymer or light diffusing particles.

The acrylic substrate or other acrylic-containing layers may include from 0.1 to 50 percent by weight, of one or more light diffusing particles within that layer. Preferred light diffusing particles have a refractive index that differs from that of the matrix by 0.001, preferably by more than 0.01, and most preferably by more than 0.02, as measured in accordance with ASTM D542. The particles are typically polymeric and cross-linked. They may be polymerized using various techniques but suspension polymerization is preferred. The particles are preferable spherical and have an average diameter by weight in the range of 4-300 microns with a particle size distribution in the range of 1-500 microns. It is preferable for the particle size distribution to be narrow such that 90% of the particles by weight are less than 1.5 times the average particle size by weight. The polymeric particles have compositions including, but not limited to, acrylic polymers or acrylic-styrene copolymers.

The moisture-resistant layer will have a thickness of 0.0001" to 0.25" and preferably 0.001" to 0.125".

The acrylic sheet of the invention includes the use of a tie layer between the acrylic substrate layer and the moisture resistant layer. The tie layer aids in the adhesion of the substrate and moisture-resistant layers, and preferably is directly between the substrate and moisture resistant layer. The tie layer could be an adhesive or may be a polymeric layer having affinity with both the acrylic substrate and the moisture-resistant layer.

A COC moisture-resistant layer can be formed from commercial COCs useful as a capstock or barrier layer, such as TOPAS® (Topas Advanced Polymers, Inc.) or APEL™ (Mitsui Chemicals America, Inc.). COCs include but are not limited to copolymers of ethylene and norbornene. Since the COC layer is relatively non-polar and it must adhere to the polar acrylic substrate, the use of a tie layer is preferred. Examples of useful tie layers include functionalized PE/PMA/PGMA (ethylene/methacrylate/glycidyl methacrylate terpolymer) product such as Arkema's LOTADER^{®} terpolymers.

The moisture-resistant material can be adhered to one or both sides of the acrylic substrate by several different means, as known in the art. In one embodiment, the moisture-resistant material and tie-layer may be co-extruded onto one or both surfaces of the acrylic substrate.

When the acrylic sheet is formed by a co-extrusion process, one needs to match the viscosity of the different layers to facilitate processing. One way to accomplish this is to produce a tie-layer that is a blend of PE/PMA/PGMA and acrylic polymer or copolymer. We have found the use of from 10-50% acrylic polymer and/or impact acrylic polymer to match the viscosity of the acrylic substrate and a COC outer layer(s), while retaining the adhesive properties of the tie-layer.

In another embodiment, the moisture-resistant material is applied by compression molding, insert molding, coating, or lamination to one or both sides of the acrylic substrate. A combination of processes can be used for multi-layer structures.

When the moisture-resistant material is applied to the acrylic substrate by means of an adhesive, and optical clarity is desired, it is important to use an adhesive having similar optical properties as the acrylic substrate.

When a tie layer is needed to adhere the moisture-resistant layer to the acrylic substrate, the same tie layer could also be used to adhere the moisture-resistant layer to the acrylic surface layer. In one embodiment, a symmetrical 9-layer sheet is produced via co-extrusion using 3 extruders. The primary extruder (B) is used to melt and convey the acrylic melt stream, a secondary extruder (A) is used to melt and convey the moisture-resistant melt stream, and a tertiary extruder (C) is used to melt and convey the tie layer melt stream. The 3 melt streams are combined in a feedblock to achieve the desired layer configuration before exiting the extrusion die and subsequently being cooled using polishing rolls. In this example, the desired layer configuration is BCACBCACB. However, the thickness of the B-layer in the center of the sheet is substantially thicker than the other layers. An alternative technique used to produce the sheet is as follows: A 5-layer film is produced that is symmetrical. It has acrylic surface layers and a moisture resistant layer in the center adhered using tie layers. Using the same letters to identify the materials above, the film layer configuration is BCACB. The film thickness is greater than 0.0001" thick. Subsequent to the film production, the acrylic resin is fed to a sheet extrusion line. The molten acrylic substrate exits the die. As the molten acrylic enters the polishing rolls to be cooled, the 5-layer film is laminated onto one side of the acrylic substrate. The resultant sheet product has the BCACB layer configuration since the B-layer of the film melds with the B substrate and becomes indistinguishable. Note that other configurations could also be accomplished by laminating appropriate film structures onto 1 or 2 sides, by co-extrusion directly, or by a combination of both processes.

In one embodiment, a thin outer acrylic layer is coextruded, laminated or adhered on one or both sides of the acrylic sheet or profile. Additionally, enhanced weathering properties may be achieved by adhering a thin surface layer of acrylic on the exterior side(s) of the moisture-resistant layer. The use of an acrylic outer layer provides excellent gloss, hardness, scratch resistance and weatherability to the acrylic sheet or profile.

The multi-layer structure of the invention may be transparent, translucent or opaque - depending on the requirements of the final use. It may also contain colorants and/or dyes.

Some examples of multi-layer structures of the invention include, but are not limited to the following compositions. One in the art can imagine many other such combinations based on the information contained herein. The "acrylic" middle layer represents the substrate layer. While the illustrations are generally shown as symmetrical structures, they could be used with the moisture resistant material and/or other layers on only one side of the acrylic substrate layer.
- COC/tie layer/ acrylic /tie layer/COC
- acrylic /tie/COC/tie/ acrylic /tie/COC/tie/ acrylic
- PVDF/PVDF- acrylic blend/ acrylic /PVDF- acrylic blend/PVDF
- acrylic /PVDF- acrylic blend/PVDF/PVDF- acrylic blend/ acrylic /PVDF-acrylic blend/PVDF/PVDF- acrylic blend/ acrylic
- COC/tie layer/ acrylic +impact modifiers/tie layer/COC
- COC/tie layer/ acrylic +light diffusing particles/tie layer/COC
- COC/tie layer/ acrylic +impact modifiers+light diffusing particles/tie layer/COC
- acrylic /tie/COC/tie/ acrylic +light diffusing particles/tie/COC/tie/ acrylic
- acrylic /tie/COC/tie/ acrylic +impact modifiers/tie/COC/tie/ acrylic
- acrylic +light diffusing particles/tie/COC/tie/ acrylic /tie/COC/tie/ acrylic +light diffusing particles
- acrylic +light diffusing particles/tie/COC/tie/ acrylic +impact modifiers/tie/COC/tie/ acrylic +light diffusing particles
- PVDF/PVDF- acrylic blend/ acrylic +impact modifiers/PVDF- acrylic blend/PVDF
- PVDF/PVDF- acrylic blend+impact modifiers/ acrylic /PVDF- acrylic blend+impact modifiers /PVDF
- PVDF/PVDF- acrylic blend+impact modifiers/ acrylic +impact modifiers /PVDF- acrylic blend+impact modifiers /PVDF
- PVDF+light diffusing particles/PVDF- acrylic blend/ acrylic /PVDF-acrylic blend/PVDF+light diffusing particles

Also note that acrylic in one layer may have the same or a different composition than the acrylic in another layer.

The low-moisture-absorbing sheet of the invention produces a more structurally rigid formed part upon weathering versus standard acrylic. The reduction in warping is especially useful in forming articles requiring constant optical properties, such as glazing, lenses, and screens for TVs and electronic devices including computer screens. It also includes light guide panels (LGPs), light diffusing sheet, or other components used in thin film transistor (TFT) liquid crystal display (LCD) TVs. The dimensional stability of the composition of the invention also makes it useful in articles such as optical, video and laser discs.

### Examples

### Example 1

A series of compression molded sheet samples were prepared consisting of a standard Altuglas International V-grade - PLEXIGLAS V045- inner layer as the substrate and a low moisture absorbing layer on each side of the substrate. The test samples with the COC as the 2-outer layers required a tie-layer on both sides to adhere to the PLEXIGLAS V045 (essentially creating a five layer ABCBA structure). In Examples 1c and 1d, grade 8007F-04 and grade 5010L-01 from Topas Advanced Polymers, Inc. were used, respectively. The tie-layer is LOTADER 8900- a PE/PMA/PGMA from Arkema Incorporated. Testing consisted of measuring water absorption over time and measuring sheet warpage over time versus a monolithic sheet produced using PLEXIGLAS V045 resin.

### Compression molding details:

| Sheet Sample | Width | Length |
|---|---|---|
| Example 1a | 2.475" | 5.280" |
| Example 1b | 2.477" | 4.857" |
| Example 1c | 2.487" | 5.2775" |
| Example 1e | 2.397" | 5.243" |

### Detailed Compression Molding Conditions:

Carver Press temperature is set at 320°F
Press COC pellets into COC film.
Place Kynar/acrylic film on each side of the PLEXIGLAS V045.
Place Lotader 8900 (melted film) on to the PLEXIGLAS V045 each side and then the COC film.
Place entire structure between polished metal plates,
Place in Carver Press. Close platens of the Carver press to nominal pressure
Hold for 1 minute
Take pressure up by using handle to 5000psi.
Hold for 1 minute.
Take pressure up to 10,000 psi
Hold for 1 minute
Release pressure to open platens.
Remove structure and place in cooling Carver press for 2 minutes.

### ABCBA Materials in Example 1

| Example | Tie-Layer-B | Substrate-C | Film thickness | Outer Layer-AComposition |
|---|---|---|---|---|
| 1a | - | PLEXIGLAS V045 | 0.0012 inches | 80/20 (PVDF/Acrylic) // 25/75(PVDF /Acrylic) |
| 1b | - | PLEXIGLAS V045 | 0.002 inches | 100% (PVDF)//80/20 (PVDF Acrylic)//25/75(PVDF /Acrylic) |
| 1c | PE/PMA/PGMA | PLEXIGLAS V045 | 0.0155 inches | TOPAS COC-cyclic olefin (8007F-04) |
| 1d | PE/PMA/PGMA | PLEXIGLAS V045 | 0.0185 inches | TOPAS COC-cyclic olefin (5010L-01) |
| 1e | - | PLEXIGLAS V045 | - | PMMA control sample |

The water absorption data from Figure #1 clearly shows that the Example 1c samples (COC on both sides of the PLEXIGLAS V045 with the Lotader 8900 as the tie-layer), the ABCBA structure, absorbs the least amount of water out of the sample series. Examples 1a and 1b samples (Kynar/Acrylic film on both sides of the PLEXIGLAS V045) absorbs less water than the Example 1e control sheet sample. Weight gain was measured at various time intervals after water immersion. The water absorption test was performed in accordance with ASTM D570, except 1 inch by 1 inch samples were used.

Relative sheet warpage was tested by placing the compression molded multi-layer plaques on top of identical containers of water (mini-aquariums). The change in flatness is measured over time for each of these samples. The control sample consisting of only the acrylic (V045) facing the water demonstrates more bowing (less flatness) due to more expansion from moisture absorption than the samples containing the 2-sided low moisture absorbing layers. Sheet bowing was measured via placing the sheet samples onto a flat surface and measuring the deflection distance in the middle of the sheet sample (versus the flat surface) and observed via an optical microscope (Olympus SZ-PT). In Table 1, one can see the differences in the gap due to warpage or bowing, with the V045 sheet sample showing the largest gap. It should be noted that one can easily observe the differences in bowing, visually as well.

**Table 1 (Sheet Warpage over a Water Bath)**

| Example | Sheet thickness (mils) | Outer Layer Material | Gap due to Bowing (mils) (after 196 days) |
|---|---|---|---|
| 1a | 125 | 80/20 (PVDF /Acrylic) //25/75(PVDF /Acrylic) | 19 |
| 1b | 130 | 100% (PVDF)//80/20 (PVDF /Acrylic)//25/75(PVDF /Acrylic) | 16 |
| 1c | 100 | TOPAS COC (8007F-04) | 25 |
| 1e | 87 | None | 64 |

The optical properties of the multi-layer compression molded sheet were contrasted to the sheet produced using the PLEXIGLAS V045 resin control sample.

**Table 2- Optical Properties of Compression Molded Sheet**

| **Example** | **Light Transmittance (%)** | **Haze (%)** |
|---|---|---|
| 1e | 92.3 | 3.0 |
| 1c | 89.8 | 23.2 |
| 1b | 90.7 | 19.5 |
| 1a | 91.5 | 8.9 |

### Example 2:

A compression molded multi-layer plaque having an acrylic/poly(vinylidene fluoride) (PVDF) blend layer and an acrylic layer of PLEXIGLAS V045 (Arkema) was tested for surface energy using a marker test. The surface energy of the acrylic/PVDF side was lower than that of the acrylic side, as the marking was easily wiped off the PVDF side, but could not be removed from the acrylic side.

### Example 3:

A compression molded multi-layer plaque having an acrylic/poly(vinylidene fluoride) (PVDF) blend layer on each surface and an acrylic interlayer of PLEXIGLAS V044 (Arkema) was tested for surface energy using a marker test. The marking was easily wiped off each of the PVDF sides.

## Claims

1. A low moisture absorbing multi-layer acrylic sheet, film, profile, or other shaped object, comprising an acrylic substrate, at least one tie layer, and at least one moisture-resistant material between the acrylic substrate and the side of the multi-layer acrylic sheet in contact with the environment, wherein said moisture-resistant material is selected from the group consisting of cyclic olefm copolymer (COC), PVDF homopolymers and copolymers, PVDF/HFP (hexafluoropropylene) copolymer, polyvinylfluoride polymers and copolymers, polystyrenics, polyesters, polycarbonates, polystyrene/acrylonitrile (PSAN), acrylate-styrene-acrylonitrile polymer (ASA), and clear acrylonitrile-butadiene-styrene polymer (ABS).

2. The low moisture absorbing multi-layer acrylic sheet of claim 1 wherein said acrylic sheet comprises a copolymer of at least 60 percent by weight of methyl methacrylate units, and from 0.1 to 40 percent by weight of at least one C₂₋₂₀ alkyl acrylate.

3. The low moisture absorbing multi-layer acrylic sheet of any of the preceding claims, wherein said acrylic substrate further comprises an impact modifier.

4. The low moisture absorbing multi-layer acrylic sheet of any of the preceding claims, wherein said acrylic substrate further comprises light diffusing particles and/or impact modifiers.

5. The low moisture absorbing multi-layer acrylic sheet of any of the preceding claims, wherein said moisture resistant layer(s) is from 0.0001" to 0.25" (from 2.54 to 6350 µm) in thickness.

6. The low moisture absorbing multi-layer acrylic sheet of any of the preceding claims, wherein said moisture-resistant layer comprises a cyclic olefin copolymer.

7. The low moisture absorbing multi-layer acrylic sheet of any of the preceding claims, wherein said tie layer comprises a terpolymer of ethylene, methyl acrylate and glycidyl methacrylate.

8. The low moisture absorbing multi-layer acrylic sheet of any of the preceding claims, wherein said tie layer comprises a melt blend of acrylic and/or impact acrylic polymer and a terpolymer of ethylene, methyl acrylate and glycidyl methacrylate.

9. The low moisture absorbing multi-layer acrylic sheet of any of the preceding claims, wherein said sheet, film, profile or other multi-layer shaped object is transparent.

10. The low moisture absorbing multi-layer acrylic sheet of any of the preceding claims, wherein said sheet is formed by coextrusion, lamination, insert molding, solvent coating or compression molding forms sheet.

11. The low moisture absorbing multi-layer acrylic sheet of any of the preceding claims, comprising glazing, lenses, screens for TVs, screens for electronic devices, light guide panels (LGPs), light diffusing sheet, direct-lit or edge-lit backlight unit, a thin film transistor (TFT), or liquid crystal display (LCD) TVs.

12. A method of reducing warping of an acrylic substrate by applying to said substrate a moisture-resistant material comprising an acrylic substrate, and at least one moisture-resistant material selected from the group consisting of cyclic olefm copolymer (COC), PVDF homopolymers and copolymers, PVDF/HFP (hexafluoropropylene) copolymer, polyvinylfluoride polymers and copolymers, polystyrenics, polyesters, polycarbonates, polystyrene/acrylonitrile (PSAN), acrylate-styrene-acrylonitrile polymer (ASA), and clear acrylonitrile-butadiene-styrene polymer (ABS), to form a low moisture absorbing multi-layer acrylic sheet, film, profile, or other shaped multi-layer object.

13. The method of claim 12 wherein said acrylic sheet, film or profile further comprises a tie layer between said acrylic substrate and said moisture-resistant material.

14. The method of claims 12 or 13 wherein said acrylic substrate further comprises an impact modifier.

15. The method of claims 12 - 14 wherein said acrylic substrate further comprises light diffusing particles.

## Patentansprüche

1. Mehrschichtiges Acrylflächengebilde, mehrschichtige Acrylfolie, mehrschichtiges Acrylprofil oder mehrschichtiger anderer Acrylformkörper mit geringer Feuchtigkeitsabsorption, umfassend ein Acrylsubstrat, mindestens eine Verbindungsschicht und mindestens ein feuchtigkeitsbeständiges Material zwischen dem Acrylsubstrat und der mit der Umgebung in Kontakt stehenden Seite der mehrschichtigen Acrylfolie, wobei das feuchtigkeitsbeständige Material aus der Gruppe bestehend aus Cycloolefincopolymer (COC), PVDF-Homopolymeren und -Copolymeren, PVDF/HFP(Hexafluorpropen)-Copolymer, Polyvinylfluoridpolymeren und -copolymeren, Polystyrolen, Polyestern, Polycarbonaten, Polystyrol/- acrylnitril (PSAN), Acrylat-Styrol-Acrylnitril-Polymer (ASA) und klarem Acrylnitril-Butadien-Styrol-Polymer (ABS) ausgewählt ist.

2. Mehrschichtiges Acrylflächengebilde mit geringer Feuchtigkeitsabsorption nach Anspruch 1, wobei das Acrylflächengebilde ein Copolymer aus mindestens 60 Gewichtsprozent Methylmethacrylat-Einheiten und 0,1 bis 40 Gewichtsprozent mindestens eines C₂-C₂₀-Alkylacrylats umfasst.

3. Mehrschichtiges Acrylflächengebilde mit geringer Feuchtigkeitsabsorption nach einem der vorhergehenden Ansprüche, wobei das Acrylsubstrat ferner Schlagzähigkeitsmodifikator umfasst.

4. Mehrschichtiges Acrylflächengebilde mit geringer Feuchtigkeitsabsorption nach einem der vorhergehenden Ansprüche, wobei das Acrylsubstrat ferner lichtstreuende Teilchen und/oder Schlagzähigkeitsmodifikatoren umfasst.

5. Mehrschichtiges Acrylflächengebilde mit geringer Feuchtigkeitsabsorption nach einem der vorhergehenden Ansprüche, wobei die feuchtigkeitsbeständige Schicht bzw. die feuchtigkeitsbeständigen Schichten eine Dicke von 0,0001" bis 0,25" (2,54 bis 6350 µm) aufweist bzw. aufweisen.

6. Mehrschichtiges Acrylflächengebilde mit geringer Feuchtigkeitsabsorption nach einem der vorhergehenden Ansprüche, wobei die feuchtigkeitsbeständige Schicht ein Cycloolefincopolymer umfasst.

7. Mehrschichtiges Acrylflächengebilde mit geringer Feuchtigkeitsabsorption nach einem der vorhergehenden Ansprüche, wobei die Verbindungsschicht ein Terpolymer von Ethylen, Methylacrylat und Glycidylmethacrylat umfasst.

8. Mehrschichtiges Acrylflächengebilde mit geringer Feuchtigkeitsabsorption nach einem der vorhergehenden Ansprüche, wobei die Verbindungsschicht eine Schmelzemischung von Acryl- und/oder Impact-Acrylpolymer und ein Terpolymer von Ethylen, Methylacrylat und Glycidylmethacrylat umfasst.

9. Mehrschichtiges Acrylflächengebilde mit geringer Feuchtigkeitsabsorption nach einem der vorhergehenden Ansprüche, wobei das Flächengebilde, die Folie, das Profil oder der andere mehrschichtige Formkörper transparent ist.

10. Mehrschichtiges Acrylflächengebilde mit geringer Feuchtigkeitsabsorption nach einem der vorhergehenden Ansprüche, wobei das Flächengebilde durch Coextrudieren, Laminieren, Zweistufen-Spritzgießen, Lösungsmittelbeschichten oder Formpressen gebildet wird.

11. Mehrschichtiges Acrylflächengebilde mit geringer Feuchtigkeitsabsorption nach einem der vorhergehenden Ansprüche, umfassend Verglasungen, Linsen, Fernsehbildschirme, Bildschirme für elektronische Vorrichtungen, Lichtleiterplatten (LGP), Lichtstreuplatten, direkt beleuchtete oder kantenbeleuchtete Hintergrundbeleuchtungseinheiten, Dünnschichttransistoren (TFT) oder Fernsehgeräte mit Flüssigkristallanzeige (LCD).

12. Verfahren zur Verringerung des Verzugs eines Acrylsubstrats durch Aufbringen eines feuchtigkeitsbeständigen Materials, das ein Acrylsubstrat und mindestens ein feuchtigkeitsbeständiges Material aus der Gruppe bestehend aus Cycloolefincopolymer (COC), PVDF-Homopolymeren und -Copolymeren, PVDF/HFP(Hexafluorpropylen)-Copolymer, Polyvinylfluoridpolymeren und -copolymeren, Polystyrolen, Polyestern, Polycarbonaten, Polystyrol/- acrylnitril (PSAN), Acrylat-Styrol-Acrylnitril-Polymer (ASA) und klarem Acrylnitril-Butadien-Styrol-Polymer (ABS) umfasst, auf das Substrat zur Bildung eines mehrschichtigen Acrylflächengebildes, einer mehrschichtigen Acrylfolie, eines mehrschichtigen Acrylprofils oder eines anderen mehrschichtigen Acrylformkörpers mit geringer Feuchtigkeitsabsorption.

13. Verfahren nach Anspruch 12, bei dem das Acrylflächengebilde, die Acrylfolie bzw. das Acrylprofil ferner eine Verbindungsschicht zwischen dem Acrylsubstrat und dem feuchtigkeitsbeständigen Material umfasst.

14. Verfahren nach Anspruch 12 oder 13, bei dem das Acrylsubstrat ferner einen Schlagzähigkeitsmodifikator umfasst.

15. Verfahren nach einem der Ansprüche 12-14, bei dem das Acrylsubstrat ferner lichtstreuende Teilchen umfasst.

## Revendications

1. Feuille, film, profilé ou autre objet façonné multicouche en acrylique à faible absorption d'humidité, comprenant un substrat acrylique, au moins une couche de liaison, et au moins un matériau résistant à l'humidité entre le substrat acrylique et le côté de la feuille multicouche en acrylique en contact avec l'environnement, ledit matériau résistant à l'humidité étant choisi dans le groupe constitué par les copolymères oléfiniques cycliques (COC), les homopolymères et copolymères de PVDF, le copolymère PVDF/HFP (hexafluoropropylène), les polymères et copolymères de polyfluorure de vinyle, les polystyrènes, les polyesters, les polycarbonates, le polystyrène/acrylonitrile (PSAN), le polymère acrylate-styrène-acrylonitrile (ASA), et le polymère acrylonitrile-butadiène-styrène (ABS) transparent.

2. Feuille multicouche en acrylique à faible absorption d'humidité selon la revendication 1, ladite feuille en acrylique comprenant un copolymère d'au moins 60 pour cent en poids de motifs méthacrylate de méthyle, et de 0,1 à 40 pour cent en poids d'au moins un acrylate d'alkyle en C₂₋₂₀.

3. Feuille multicouche en acrylique à faible absorption d'humidité selon l'une quelconque des revendications précédentes, dans laquelle ledit substrat acrylique comprend également un modificateur de résistance aux chocs.

4. Feuille multicouche en acrylique à faible absorption d'humidité selon l'une quelconque des revendications précédentes, dans laquelle ledit substrat acrylique comprend également des particules diffusant la lumière et/ou des modificateurs de résistance aux chocs.

5. Feuille multicouche en acrylique à faible absorption d'humidité selon l'une quelconque des revendications précédentes, dans laquelle ladite ou lesdites couches résistantes à l'humidité vont de 0,0001" à 0,25" (de 2,54 à 6350 µm) en épaisseur.

6. Feuille multicouche en acrylique à faible absorption d'humidité selon l'une quelconque des revendications précédentes, dans laquelle ladite couche résistante à l'humidité comprend un copolymère oléfinique cyclique.

7. Feuille multicouche en acrylique à faible absorption d'humidité selon l'une quelconque des revendications précédentes, dans laquelle ladite couche de liaison comprend un terpolymère d'éthylène, d'acrylate de méthyle et de méthacrylate de glycidyle.

8. Feuille multicouche en acrylique à faible absorption d'humidité selon l'une quelconque des revendications précédentes, dans laquelle ladite couche de liaison comprend un mélange obtenu à l'état fondu de polymère acrylique et/ou de polymère acrylique résistant aux chocs et d'un terpolymère d'éthylène, d'acrylate de méthyle et de méthacrylate de glycidyle.

9. Feuille multicouche en acrylique à faible absorption d'humidité selon l'une quelconque des revendications précédentes, ladite feuille, ledit film, ledit profilé ou ledit autre objet façonné multicouche étant transparent.

10. Feuille multicouche en acrylique à faible absorption d'humidité selon l'une quelconque des revendications précédentes, ladite feuille étant formée par coextrusion, laminage, surmoulage d'insert, revêtement en phase solvant ou moulage par compression.

11. Feuille multicouche en acrylique à faible absorption d'humidité selon l'une quelconque des revendications précédentes, comprenant un vitrage, des lentilles, des écrans pour téléviseurs, des écrans pour dispositifs électroniques, des panneaux guides de lumière (LGP), une feuille diffusant la lumière, une unité de rétroéclairage direct ou périphérique, un transistor en couches minces (TFT), ou des téléviseurs à écran à cristaux liquides (LCD).

12. Procédé de réduction du gauchissement d'un substrat acrylique par application audit substrat d'un matériau résistant à l'humidité comprenant un substrat acrylique, et au moins un matériau résistant à l'humidité choisi dans le groupe constitué par les copolymères oléfiniques cycliques (COC), les homopolymères et copolymères de PVDF, le copolymère PVDF/HFP (hexafluoropropylène), les polymères et copolymères de polyfluorure de vinyle, les polystyrènes, les polyesters, les polycarbonates, le polystyrène/acrylonitrile (PSAN), le polymère acrylate-styrène-acrylonitrile (ASA), et le polymère acrylonitrile-butadiène-styrène (ABS) transparent, pour former une feuille, un film, un profilé ou un autre objet façonné multicouche en acrylique à faible absorption d'humidité.

13. Procédé selon la revendication 12 dans lequel ladite feuille, ledit film ou ledit profilé en acrylique comprend également une couche de liaison entre ledit substrat acrylique et ledit matériau résistant à l'humidité.

14. Procédé selon la revendication 12 ou 13 dans lequel ledit substrat acrylique comprend également un modificateur de résistance aux chocs.

15. Procédé selon les revendications 12 à 14 dans lequel ledit substrat acrylique comprend également des particules diffusant la lumière.
